(19) **Europäisches Patentamt**

**European Patent Office**

**Office européen des brevets**

(11) **EP 1 079 314 A2**

(12) **EUROPEAN PATENT APPLICATION**

(43) Date of publication:
28.02.2001 Bulletin 2001/09

(51) Int. Cl.[7]: **G06F 17/30**

(21) Application number: 00306388.0

(22) Date of filing: 27.07.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 24.08.1999 JP 23717499

(71) Applicant:
**Sharp Kabushiki Kaisha**
**Osaka-shi, Osaka 545-8522 (JP)**

(72) Inventors:
• **Kawamura, Akiyoshi**
**Tenri-shi, Nara (JP)**
• **Keshi, Ikuo**
**Nara-shi, Nara (JP)**
• **Kuromusha, Kenichi**
**Tenri-shi, Nara (JP)**

(74) Representative:
**Brown, Kenneth Richard et al**
**R.G.C. Jenkins & Co.**
**26 Caxton Street**
**London SW1H 0RJ (GB)**

(54) **Apparatus and method of providing a user with an information item of interest**

(57) An apparatus offering an information item to a user using a computer, including a first storage unit (6) storing a plurality of words and vectors representing the characteristic of each word in correspondence, an information preparation unit (8) preparing information items offered to the user and first characteristic data generated according to the words and vectors stored in the first storage unit (6) for each offered information item, a second storage unit (12) storing information items used by the user, a classify circuit (40) classifying information items stored in the second storage unit (12) into a plurality of categories according to words and corresponding vectors included in each information item referring to words and vectors stored in the first storage unit (6), and a retrieval circuit (46) retrieving and providing an information item including first characteristic data having a predetermined relation with second characteristic data out of information items prepared and offered to the user by the information preparation unit (8). Each of the plurality of categories are characterized by second characteristic data defined in relation to the words and vectors included in the category.

FIG.1

## Description

BACKGROUND OF THE INVENTION

Field of the Invention

The present invention relates to an apparatus retrieving and providing a user with an information item of interest according to the operation history of the user operating the computer. More particularly, the present invention relates to an apparatus analyzing the user's operation history to retrieve and offer an information item of great interest to the user according to the analysis result.

Description of the Background Art

A system is known that offers an information item that is required by a user of a computer to the user out of the information items stored in the computer. In accordance with the recent increase of the storage capacity of the computers in such a system, it has become extremely difficult to efficiently retrieve an information item required by the user, for example an information item of interest to the user, out of the great amount of information items stored in the database of the system.

In one approach to the problem, a user registers relevant keywords in advance and the system offers the information item of interest to the user. Although the required information item can be retrieved from the tremendous amount of information items, keyword registration is not so easy.

To the end of dispensing with such keyword registration, Japanese Patent Laying-Open No. 7-56929 discloses an apparatus that retrieves an information item from the database utilizing the purchase history of items. This apparatus includes a purchase history database storing the history of objects formerly purchased by the user, an object database registering objects of interest for purchase, a distance calculation circuit calculating the similarity between an object of interest for purchase registered in the object database and an object that was purchased formerly by the user, an arrange circuit arranging the registered objects of interest for purchase in the descending order of similarity, and a recommended object display circuit displaying an object of high similarity as a recommended object.

According to this apparatus, an object having the tendency of similarity with an object formerly purchased by the user can be retrieved from the object database to be displayed as a recommended object particularly of high similarity by referring to the past purchase history stored in the purchase history database. Thus, the user can purchase an object taking into consideration the recommended object.

If the amount of data in the purchase history database and in the object database becomes significantly great in the foregoing apparatus, the period of time consumed for calculating individually the similarity between the object in the purchase history database and the item in the object database and retrieving a recommended object will be too long. Although the foregoing apparatus is implemented to reduce the number of retrievals using additional information to select a portion of the history of purchased objects, a retrieval completely corresponding to the interest of the user cannot be provided by just the selected history.

Japanese Patent Laying-Open No. 11-66081 discloses a profile acquisition apparatus that automatically acquires information of interest to the user. This apparatus includes a text retrieval circuit retrieving at least one text out of the text produced by the user, the text quoted by the user and the text referred to by the user, a keyword extraction circuit extracting a keyword according to a frequency of a word appearing in the retrieved text, a profile generation circuit generating a profile of the user according to the extracted keyword, and an information retrieval circuit retrieving new information corresponding to the profile according to the generated profile.

This apparatus retrieves a text from the text database, extracts keywords according to the frequency of a word in the text, and generates a corresponding profile for the user according to the keyword. Corresponding new information can be retrieved according to the generated profile. As a result, words or phrases that are often used or referred to by the user are automatically obtained as keywords. New information is retrieved according to the profile including the obtained keywords to offer the retrieved information to the user.

In this apparatus, the retrieved results greatly differ depending upon what retrieval expression is used for retrieval since the retrieval is based on a retrieval expression generated by the OR or AND of the extracted keyword. A retrieval sufficiently reflecting the interest of the user could not be effected.

SUMMARY OF THE INVENTION

An object of the present invention is to provide an information offer apparatus, an information offer method and a computer-readable recording medium encoded with a program that can extract information of high interest to the user rapidly and properly according to the history of computer usage by the user to retrieve and offer information reflecting the user's interest using the extracted information.

Another object of the present invention is to provide an information offer apparatus, an information offer method, and a computer-readable recording medium encoded with a program that can extract information of high interest to the user rapidly and properly according to a word used in the computer-usage of the user to retrieve and offer information reflecting the user's interest using the extracted information.

A further object of the present invention is to provide an information offer apparatus, an information offer method, and a computer-readable recording medium encoded with a program that can extract information of high interest to the user rapidly and properly according to a vector representing the characteristic of a word used in the computer-usage of the user to retrieve and offer information reflecting the user's interest using the extracted information.

Still another object of the present invention is to provide an information offer apparatus, an information offer method, and a computer-readable recording medium encoded with a program that can extract information of high interest to the user rapidly and properly according to the history of computer-usage by the user distinguishing the user to whom an information item is to be offered to retrieve and offer information reflecting the user's interest using the extracted information.

A still further object of the present invention is to provide an information offer apparatus, an information offer method, and a computer-readable recording medium encoded with a program that can extract information of high interest to the user rapidly and properly according to the history of computer-usage by the user distinguishing the type of information utilized by the user to retrieve and offer information reflecting the user's interest using the extracted information.

According to an aspect of the present invention, an information offer apparatus includes a first storage unit storing a plurality of words and vectors representing the characteristic of respective words in correspondence, an information preparation circuit preparing an information item offered to the user and first characteristic data generated according to the word and vector stored in the first storage unit with respect to each offered information item, a second storage circuit storing an information item used by the user, a classify circuit classifying information items stored in the second storage circuit into a plurality of categories according to the words and corresponding vectors included in each information item by referring to the words and vectors stored in the first storage unit. Each of the plurality of categories is characterized by second characteristic data defined in relation to the word and vector included in the category. The information offer apparatus of the present aspect further includes a retrieval circuit retrieving and providing an information item including first characteristic data having a predetermined relationship with the second characteristic data out of the information items prepared and offered to the user by the information preparation circuit.

The user can obtain an information item including first characteristic data that has a predetermined relationship with the second characteristic data out of the information items prepared and offered to the user by the information preparation circuit. The second characteristic data characterizes the category of the classified information items used by the user, and indicates information of high interest to the user. Since the information item that includes first characteristic data having a close relationship with the second characteristic data is information of high interest to the user, the user can obtain information that she/he is interested in.

Further preferably, the second storage circuit stores a plurality of information items used by the user. The classify circuit includes a circuit that classify the plurality of information items stored in the second storage circuit into a plurality of categories according to one or both of the distance and cosine angle between a plurality of vectors corresponding to the plurality of information items.

The classify circuit classifies information items into a plurality of categories according to one or both of the distance and cosine angle between the plurality of vectors. An information item can be retrieved rapidly and properly according to second characteristic data that characterizes a classified category based on an operation of the vector representing the characteristic of a word, not the information item per se used by the user.

According to yet a further aspect of the present invention, an information offer method provides an information item to the user utilizing a computer. The information offer method includes the steps of storing a plurality of words and vectors representing the characteristic of respective words in correspondence, preparing an information item offered to the user and first characteristic data generated according to the word and vector stored in the step of storing a plurality of words for each of the offered information item, storing an information item used by the user, and classifying the information items stored at the step of storing information items into a plurality of categories according to the word and corresponding vector included in each information item by referring to the word and vector stored in the step of storing a plurality of words. Each of the plurality of categories is characterized by second characteristic data defined in relation to the word and vector included in the category. The information offer method further includes the step of retrieving and providing an information item including first characteristic data having a predetermined relationship with the second characteristic data out of the information items prepared and offered to the user at the step of preparing information items.

The user can obtain an information item including first characteristic data that has a predetermined relationship with the second characteristic data out of the information items offered to the user. The second characteristic data characterizes the category of the classified information items used by the user, and indicates information of high interest to the user. Since the information item that includes first characteristic data having a close relationship with the second characteristic data is information of high interest to the user, the user can obtain information that she/he is interested in.

According to yet another aspect of the present invention, a computer-readable recording medium encoded with a program that realizes an information offer method offering an information item to a user utilizing a computer. The information offer method includes the steps of storing a plurality of words and vectors representing the characteristic of respective words in correspondence, preparing an information item offered to the user and first characteristic data generated according to the word and vector stored in the step of storing a plurality of words for each of the offered information item, storing an information item used by the user, and classifying the information items stored at the step of storing information items into a plurality of categories according to the word and corresponding vector included in each information item by referring to the word and vectors stored in the step of storing a plurality of words. Each of the plurality of categories is characterized by second characteristic data defined in relationship with the word and vector included in the category. The information offer method further includes the step of retrieving and providing an information item including first characteristic data having a predetermined relationship with the second characteristic data out of the information items prepared and offered to the user at the step of preparing information items.

The user can obtain an information item including first characteristic data that has a predetermined relationship with the second characteristic data out of the information items prepared and offered to the user at the step of preparing an information item. The second characteristic data characterizes the category of the classified information items used by the user, and indicates information of high interest to the user. Since the information item that includes first characteristic data having a close relationship with the second characteristic data is information of high interest to the user, a computer-readable recording medium encoded with a program to realize an information offer method to allow the user to obtain information that she/he is interested in can be provided.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram of an information offer apparatus according to a first embodiment of the present invention.
Fig. 2 shows the contents of offerable data.
Fig. 3 shows the contents of operation history data.
Fig. 4 shows the contents of a word dictionary.
Fig. 5 shows the contents of operation history vectors.
Fig. 6 shows the contents of categories subjected to a clustering process.
Fig. 7 shows words in respective categories.
Fig. 8 shows an appearance of a computer that realizes the information offer apparatus of the first embodiment.
Fig. 9 is a block diagram of the computer that realizes the information offer apparatus of the first embodiment.
Figs. 10, 11 and 12 are flow charts schematically showing an operation history data process, an offerable data process, and a retrieval process, respectively.
Fig. 13 is a block diagram of an information offer apparatus according to a second embodiment of the present invention.
Fig. 14 shows the contents of offerable vectors.
Fig. 15 shows vectors in respective categories.

DESCRIPTION OF THE PREFERRED EMBODIMENTS

Embodiments of the present invention will be described hereinafter with reference to the drawings. Corresponding components have the same reference characters allotted. Their labels and functions are also the same. Therefore, detailed description thereof will not be repeated, where appropriate.

First Embodiment

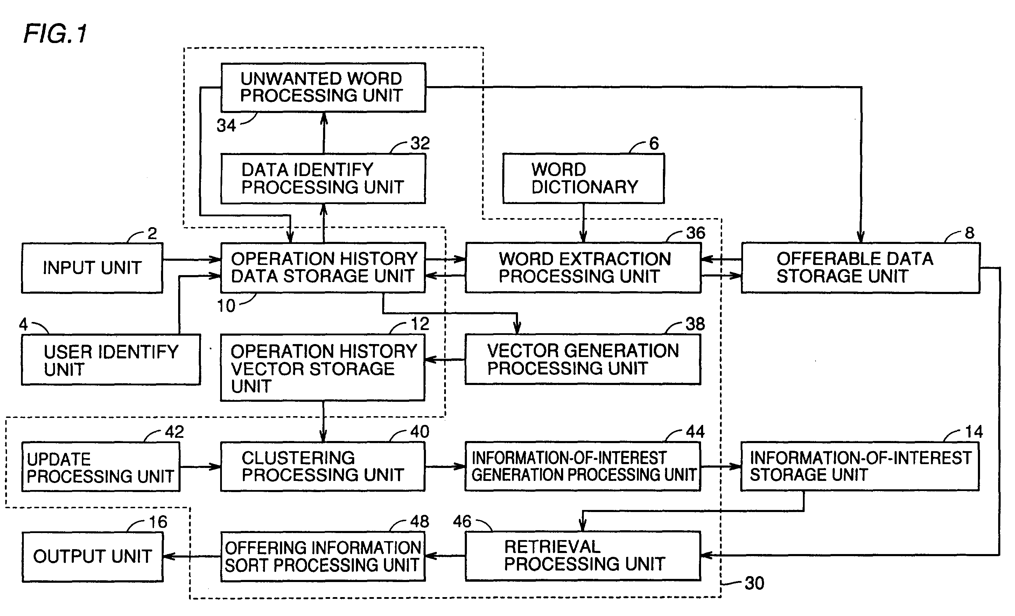

Referring to Fig. 1, an information offer apparatus according to a first embodiment of the present invention includes an input unit 2 to enter operation history data including information items and the like used in the past by the user, a user identify unit 4 identifying the user, a word dictionary 6 storing words and word vectors representing the characteristic of the respective words, an offerable data storage unit 8 storing information items that can be offered to the user, an operation history data storage unit 10 connected to input unit 2 and user identify unit 4 to store user's operation history data input through input unit 2 for each user, an operation history vector storage unit 12 storing an operation history vector generated from the operation history data, an information-of-interest storage unit 14 applying a clustering process to classify operation history vectors and storing information-of-interest which is characteristic data for each category, an output unit 16 providing the retrieved result to a monitor, a printer or the like, and an information-of-interest processing unit 30 retrieving an information item of high interest to the user.

Information-of-interest processing unit 30, which is realized by software executed on a computer in practice, includes a data identify processing unit 32 identifying a user or the type of operation history data, an unwanted word processing unit 34 deleting words not required in the process of offering an information item from words included in operation history data and offerable data, a word extraction processing unit 36 extracting a word from the operation history data and offerable data according to words stored in word dictionary 6, a vector generation processing unit 38 generating an operation history vector representing a characteristic for each operation history data according to a word vector stored in word dictionary 6 and the extracted word, a clustering processing unit 40 classifying operation history vectors into categories each consisting of vectors each pair of which vectors are within a predetermined short distance, an update processing unit 42 providing clustering processing unit 40 with an operation designation at a predetermined timing, an information-of-interest generation processing unit 44 generating information-of-interest for each category classified at clustering processing unit 40, a retrieval processing unit 46 retrieving an information item corresponding to the user from offerable data according to the information-of-interest, and an offering information sort processing unit 48 rearranging the retrieved information items in the order of importance.

Input unit 2 and user identify unit 4 are a computer keyboard, mouse, CD-ROM (Compact Disk Read-Only Memory) drive device, FD (Flexible Disk) drive device or the like, used by the user to enter operation history data and user identify code. The input operation history data includes, for example, home page data of the Internet, and EPG (Electronic Program Guide) data which is an information item of a television program. They correspond to home page data and EPG data in the event of the user viewing the same home page or same television program continuously for more than a predetermined time, downloading data from a certain home page, or recording a certain television program. The input operation history data is stored in operation history data storage unit 10 together with the user identify code and data type identify code. History data corresponding to operation of the Internet or the like can be stored in a fixed disk without the intervention of such an input unit 2 to generate operation history data from the stored history data in the fixed disk through an internal process of the computer.

Word dictionary 6, offerable data storage unit 8, operation history data storage unit 10, operation history vector storage unit 12 and information-of-interest storage unit 14 reside in predetermined storage regions on a fixed disk of the computer to store relevant data.

By way of example, an apparatus that offers an information item of a television program of interest to the user in EPG data corresponding to that television program will be described in the following.

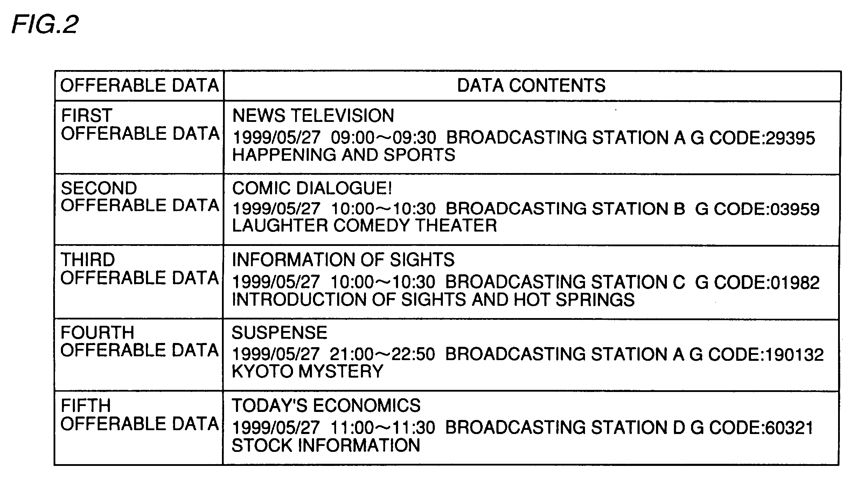

Referring to Fig. 2, the data stored in offerable data storage unit 8 is EPG data of a television program that is to be broadcasted, and includes the offerable data number and corresponding data contents. In the example of the EPG data, the EPG data includes the television program title on the first line, the broadcasting date and time, channel and G code identified television program on the second line, and a description of that program on the third line.

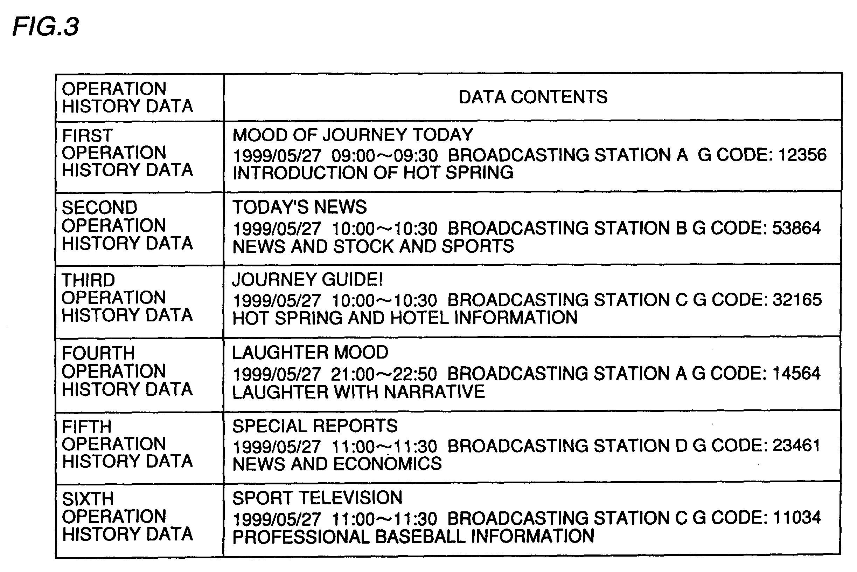

Unwanted word processing unit 34 effects a process of ignoring in the subsequent processes the portion that is not directly related to the interest of the user with respect to the operation history data and offerable data as an unwanted word. In the present embodiment, the second line (broadcasting date and time, channel and G code) of the contents of the EPG data in Figs. 2 and 3 is set as the unwanted word. In the case where the homepage data on the Internet is set as the operation history data, this unwanted word process corresponds to the process of removing the tags and the like of the HTML (Hyper-Text Markup Language) texts.

Referring to Fig. 3, the data stored in operation history data storage unit 10 is the EPG data of a television program that has been continuously viewed for over a predetermined time or recorded by the user, and includes the operation history data number and corresponding data contents. The data contents are similar to those described above, so that detailed description thereof will not be repeated here.

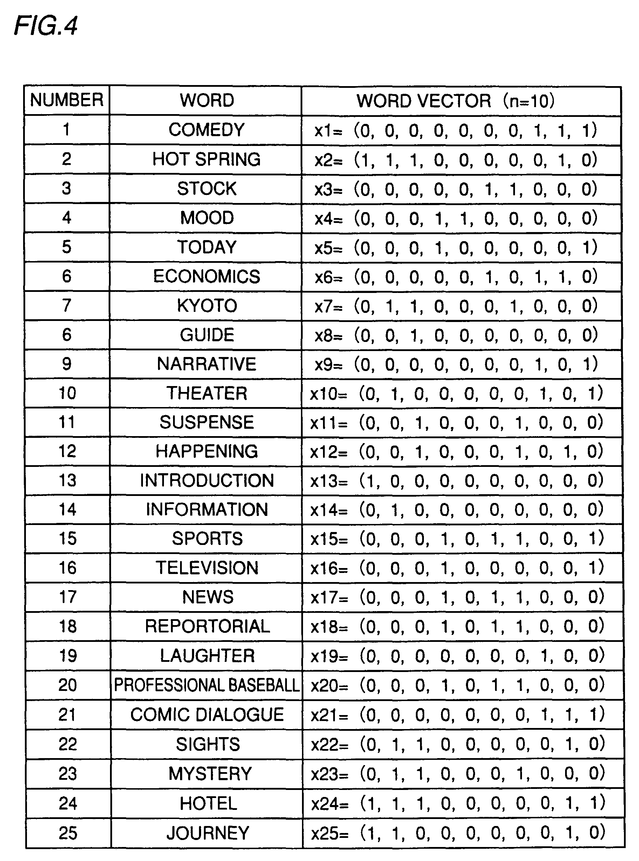

Referring to Fig. 4, word dictionary 6 includes a plurality of pairs of a word and a corresponding word vector. Word dictionary 6 is generated by having basic words and corresponding word vectors input manually and stored. The word vector indicates the degree of relationship between the concept of a word in the sentence and in the context. More specifically, the word vector represents the relationship between the concept of each word and a predetermined characteristic word in the form of a vector.

The word vector will be described here taking n characteristic words as an example. The word vector of a certain word is an n-dimensional vector. The value of each element in the n-dimensional vector is defined corresponding to the characteristic word. The word vector of a basic word J is set as $x(J) = (xj(1), ..., xj(m), ..., xj(n))$. The value of each element is $0 \leq xj(m) \leq A$ (A is a positive constant, $m = 1 \sim n$). When there is no relationship between word J and the m-th characteristic word, $xj(m) = 0$. When there is relationship, $xj(m)$ takes a value according to the degree of relationship. When a word vector corresponds to ten characteristic words (for example, characteristic word (1) = "entertainment • hobby", characteristic word (2) = "geographical site", characteristic word (3) = "nature", characteristic word (4) = "dynamic", characteristic word (5) = "emotion", characteristic word (6) = "change", characteristic word (7) = "complicated", characteristic word (8) = "easy", characteristic word (9) = "activity", characteristic word (10) = "brightness") and the value of respective elements take the binary of 0 or 1, the word vector of basic word "comedy" can be represented as (0, 0, 0, 0, 0, 0, 0, 1, 1, 1). The word dictionary shown in Fig. 4 includes word vectors of 10-dimension (n = 10).

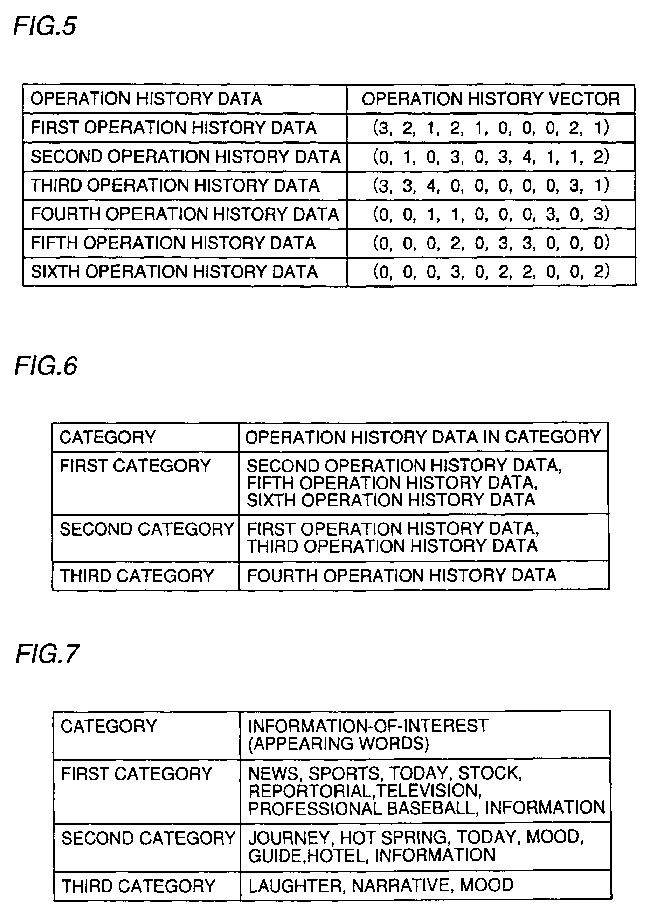

Word extraction processing unit 36 carries out a word extraction process from the data contents of the offerable data shown in Fig. 2 and the operation history data shown in Fig. 6 using the words stored in word dictionary 6 shown in Fig. 4.

Vector generation unit 38 calculates the vector sum of the word vectors corresponding to the word extracted for each operation history data of Fig. 3 to generate an operation history vector. In the case of operation history data 1 of Fig. 3, for example, a process of setting the second line in the data contents as the unrequired word is carried out by unwanted word processing unit 34, and a word stored in word dictionary 6 of Fig. 4 is extracted by word extraction processing unit 36 with respect to data subjected to the unwanted word process. As a result, the five words of "today", "journey", "mood", "hot spring" and "introduction" are extracted for operation history data 1 of Fig. 3. The sum of the word vectors corresponding to the extracted words stored in word dictionary 6 of Fig. 4 is calculated. As a result, the vector of operation history data 1 becomes (3, 2, 1, 2, 1, 0, 0, 0, 2, 1). This is stored in operation history vector storage unit 12 (Fig. 5).

Clustering processing unit 40 classifies the operation history data into categories that will be described afterwards using a self-organizing map according to a plurality of operation history vectors generated from the operation history data which is the user's operation history. This clustering processing method is not limited to a particular one as long as the operation history vectors can be classified into categories each comprising those vectors close to each other. In the specification, two vectors are "close" when the Euclidean distance or cosine angle between the vectors is small. For example, the method of carrying out clustering process on individual elements residing within a multidimension space includes the hierarchical method, the nonhierarchical method, and the like.

The clustering method of the present embodiment employs a self-organizing map. Details of the learning model of a self-organizing map is disclosed in "The Self-organizing Map", Proc. IEEE, vol. 78(9), pp. 1464-1480 by T. Kohonen. The self-organizing map is a method proposed by T. Kohonen corresponding to an unsupervised learning model according to the neural network. This method is characterized in that vector data represented as a multidimensional characteristic value can be phase-arranged in two dimensions.

Here, unsupervised learning is carried out using each operation history data represented by the word vector as the input data for learning. Each unit of the output layer is phase-arranged in the two-dimensional space, and includes a vector of a dimension identical to that of the input data. Learning is carried out by selectively approximating the vector of each unit to the input data. First, the unit having a vector closest to the input data is found. Then, respective vectors of the plurality of units which are the close-by unit within the closest vector are approximated to the input data. The vectors in the units other than the units in the close-by region are left anupdated. Following a constant number of times of learning, the process ends by mapping each operation history vector to the unit that has the closest vector. As a result, a plurality of operation history data having an identical word vector are assigned to the same unit and a plurality of operation history data having similar word vectors are assigned to the near unit to be classified. A category is a group of the same and adjacent unit.

Update processing unit 42 designates a clustering process to clustering processing unit 40. For example, update processing unit 42 designates a clustering process at a constant interval or when operation history data exceeding a constant amount is stored in operation history data storage unit 10.

Information-of-interest generation processing unit 44 searches for the word included in the operation history data in the classified categories and sets the word as information-of-interest for each category. For example, when operation history data 1-6 of Fig. 5 are subjected to a clustering process by the method of the self-organizing map, the data are classified into categories 1-3 shown in Fig. 6. By extracting the words in each classified category, information-of-interest corresponding to respective categories as shown in Fig. 7 are obtained. These information are stored in information-of-interest storage unit 14.

Retrieval processing unit 46 retrieves an information item of interest to the user from the offerable data of Fig. 2 and information-of-interest. Retrieval processing unit 46 evaluates the matching level (referred to as "first retrieval point") between the word of the information-of-interest for each category and the word included in the offerable data according to the following first equation.

$$\text{First retrieval point} = \text{number of words of information-of-interest}$$
$$\text{included in offerable data} \times 100 \,/\, \text{number of words of information-of-interest} \qquad \text{[First equation]}$$

For example, first retrieval point of first offerable data of Fig. 2 in first category of Fig. 7 will be described here. Four words, i.e., "news", "television", "happening" and "sports" appear in first offerable data after the operation of unwanted word processing unit 34 and extraction by word extraction processing unit 36. These words include three words ("news", "television", "sports") among the eight words of "news", "sports" and the like which are the information-of-interest in the first category. Therefore, first retrieval point is 3 x 100/8 = 37.5.

Offering information sort processing unit 48 deletes the retrieval result by retrieval processing unit 46, when duplicated with the user's operation history data, or resorts the information items to be offered in the order of importance.

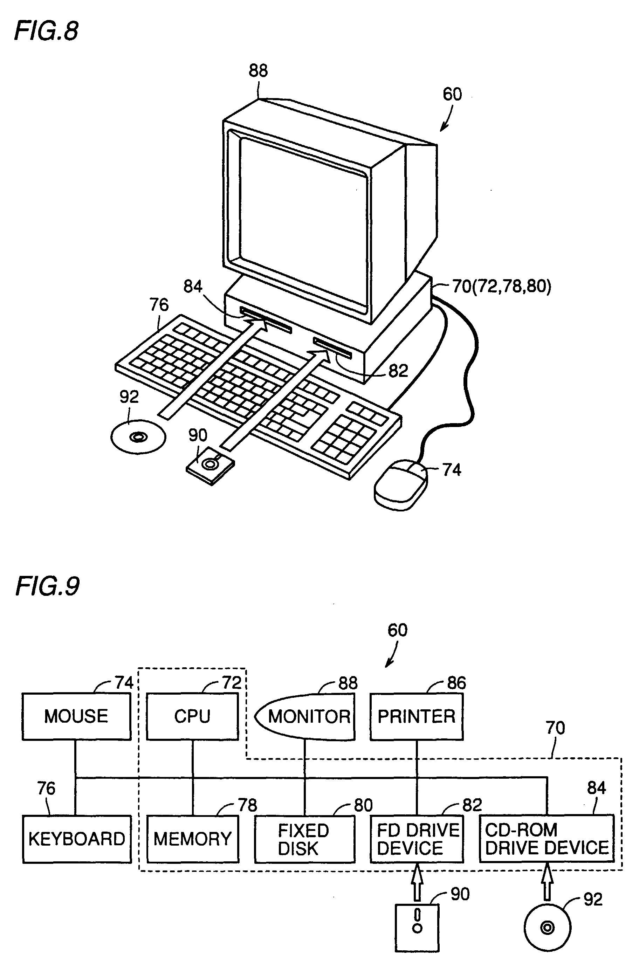

As mentioned before, information-of-interest processing unit 30, which is in practice realized by software executed on a computer such as a personal computer or work station. Fig. 8 shows an appearance of a computer which is an example of an information offer apparatus for the user. Referring to Fig. 8, this computer 60 includes a computer body 70 with an FD drive device 82 and a CD-ROM drive device 84, a monitor 88, a printer 86, a keyboard 76 and a mouse 74.

Fig. 9 is a block diagram showing a structure of computer 60. As shown in Fig. 9, computer 70 includes a CPU 72 (Central Processing Unit), a memory 78 and a fixed disk 80 connected to each other through a bus in addition to FD and CD-ROM drive devices 82 and 84. An FD 90 is loaded onto FD drive device 82. A CD-ROM 92 is mounted onto CD-ROM drive device 84.

As mentioned before, the apparatus of offering an information to the user is realized by computer hardware and software executed by CPU 72. In general, such software is stored and delivered in a recording medium such as CD-ROM 92 to be read out from the recording medium by FD drive device 82 or CD-ROM drive device 84 to be temporarily stored in fixed disk 80. The software is further read out from fixed disk 80 into memory 78 to be executed by CPU 72. The hardware per se of the computer shown in Figs. 8 and 9 are of the general type. Therefore, the most essential portion of the present invention is the software stored in the recording media such as FD 90, CD-ROM 92 and fixed disk 80.

The operation of the computer per se shown in Figs. 8 and 9 is well known. Therefore, detailed description thereof will not be repeated here.

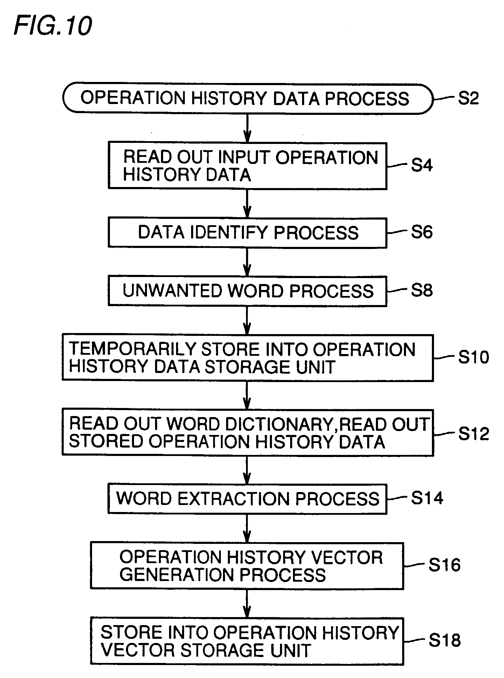

The operation history data process will be described hereinafter with reference to Fig. 10.

In the operation history data process initiated at step (abbreviated as "S" hereinafter) 2 is carried out when the stored amount of operation history data exceeds a predetermined amount or at an elapse of a predetermined time from the previous operation history data process.

At S4, CPU 72 reads out from fixed disk 80 and stores into memory 78 the operation history data entered through input unit 2 and stored in operation history data storage unit 10. Here, the user identify code and data identify code stored in operation history data storage unit 10 are also read out together.

At S6, data identify processing unit 32 determines the type of data read out at S4. This determination is carried out based on the data identify code read out at S2. In the following description, the data type is determined as EPG data by data identify processing unit 32.

At S8, unwanted word processing unit 34 extracts the unwanted word in the operation history data read out at S4 to carry out an unwanted word process for the word that is to be ignored in the subsequent process. The unwanted word is determined according to the data type identified at S6. In the case of the EPG data of Fig. 3, for example, the broadcasting day and time, the broadcasting station, and the G code on the second line that are not directly related to the interest to the user are determined as the unwanted word. In the case of first operation history data, first operation history data corresponds to data of"today is in the mood of journey" and "hot spring introduction" as a result of the process of S8.

At S10, CPU 72 temporarily stores the operation history data subjected to the unwanted word process into operation history data storage unit 10.

At S12, CPU 72 reads out the word dictionary matching the type of the operation history data from word dictionary 6 stored in fixed disk 80, and then reads out from operation history data storage unit 10 the operation history data temporarily stored at S10.

At S14, word extraction processing unit 36 carries out a word extraction process on the read out operation history data according to word dictionary 6 for each operation history data.

At S16, vector generation processing unit 38 generates the operation history vector for each operation history as the vector sum of the word vectors corresponding to the word extracted for each operation history at S14.

At S18, CPU 72 stores the operation history vectors for each operation history into operation history vector storage unit 12. As to the operation history data of Fig. 3, for example, six operation history vectors corresponding to first to sixth operation history data are stored (Fig. 5).

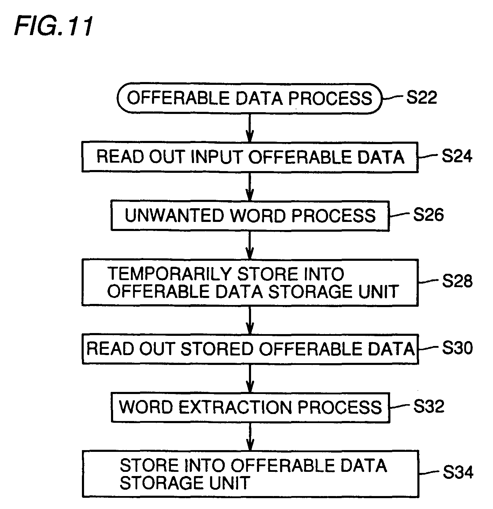

The offerable data process will be described here with reference to Fig. 11.

Upon update of the data stored in offerable data storage unit 8, the offerable data process is initiated at S22. This start timing does not have to be in synchronization with the start timing of the above-described operation history data process.

At S24, CPU 72 reads out the offerable data input through input unit 2 and stored in offerable data storage unit 8. At this stage, offerable data matching the user identify code and the data identify code is read out according to the user identify code and data identify code stored in memory 88.

At S26, unwanted word processing unit 34 extracts the unwanted word with respect to the offerable data read out at S24 to carry out the unrequired word process for the word that is to be ignored in the subsequent process.

The processes of S28, S30 and S32 correspond to the processes of S10, S12 and S14, respectively. Therefore, description thereof will not be repeated here. As a result of the processes, the four words of "news", "television", "happening" and "sports" are extracted for the first offerable data of Fig. 2, for example.

At S34, CPU 72 stores in offerable data storage unit 8 the word extracted for each offerable data.

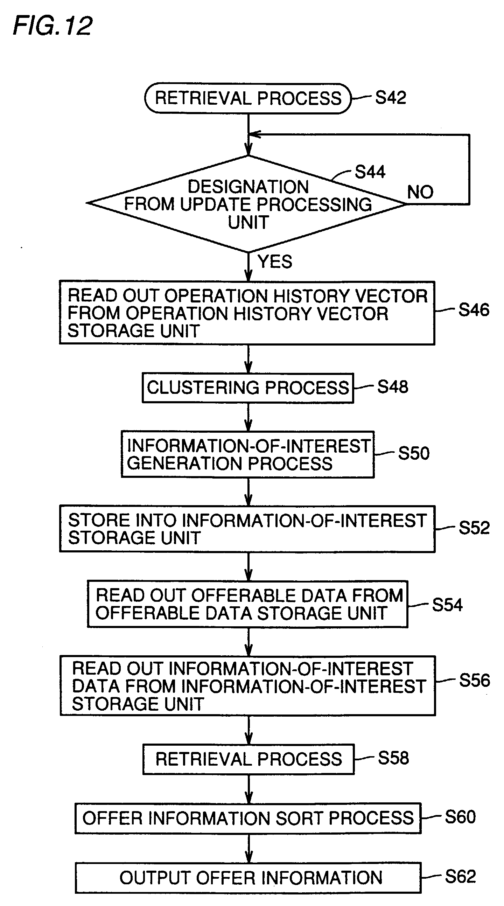

The retrieval process will be described here with reference to Fig. 12.

At S44, CPU 72 determines whether a designation of updating the clustering process is output or not from update processing unit 42. When designation is provided (YES at S44), control proceeds to S46. When designation is not provided (NO at S44), control returns to S44 to wait for update designation.

At S46, CPU 72 reads out the operation history data for each operation history stored in operation history vector storage unit 12 (Fig. 5).

At S48, clustering processing unit 40 applies the self-organizing map method on the read out operation history vector to classify the operation history data for each category according to the closeness of vectors with respect to each other. The first to sixth operation history data of Fig. 5 are classified into three categories of Fig. 6. The first category relates to news and sports. The second category relates to journeys. The third category relates to variety shows. These categories are classified based on the characteristic of the operation history data. Respective categories can be considered of indicating the user's interest.

At S50, information-of-interest generation processing unit 44 generates information-of-interest to the user from the categories classified at S48. All the words in the operation history data included in each category are set as the user's information-of-interest according to word dictionary 6 of Fig. 4. The information-of-interest of the third category in Fig. 6 is represented by the three words of "laughter", "narrative" and "mood" (Fig. 7), for example.

At S52, information-of-interest generation processing unit 44 stores in information-of-interest storage unit 14 the information-of-interest generated at S50.

At S54, CPU 72 reads out offerable data from offerable data storage unit 8. At S56, CPU 72 reads out information-of-interest data from information-of-interest storage unit 14.

At S58, retrieval processing unit 46 retrieves information-of-interest corresponding to the user from the offerable data read out at S54 according to the information-of-interest data read out at S56. First retrieval point for each offerable data shown in Fig. 2 is calculated for each category of Fig. 7. Those having the highest first retrieval point are represented as below:

| First category | top first offerable data | 37.5 |
|---|---|---|
| Second category | top third offerable data | 28.6 |
| | top fifth offerable data | 28.6 |
| Third category | top second offerable data | 33.3 |

At S60, offering information sort processing unit 48 defines the output order of the top offerable data for each category retrieved at S58. As shown in Fig. 6, three operation history data, two operation history data and one operation history data are included in the first category, the second category and the third category, respectively. The user's interest is centralized in categories including many operation history data and the categories are considered to have great importance. Therefore, the categories are assorted in the order of the number of operation history data. The offerable data having the highest first retrieval point is output for each category according to the sorted category. In the example of Fig. 6, the categories are in the order of the first category, the second category and the third category, whereas the output order of the information items are in the order of the first offerable data, the third offerable data, the fifth offerable data and the second offerable data.

At S62, CPU 72 provides the offerable data to the user from output unit 16 according to the order defined at S60.

The operation of the information offer apparatus according to the above-described structure and flow charts will be described hereinafter.

The user inserts an FD 90, CD-ROM 92 or the like in which the EPG data of the program to be broadcasted is stored into FD drive device 82 or CD-ROM drive device 84 to store the EPG data in offerable data storage unit 88. Also, the EPG data of a program that has been viewed continuously over a predetermined time or recorded by the user is stored in operation history data storage unit 10 in a similar manner. At this stage, the user enters his/her user identify code through user identify unit 4.

The type of the input operation history data is identified by data identify unit 32 (S6). The unwanted word process is carried out by unwanted word processing unit 34 according to the data type (S8). Then, the operation history data is stored in operation history data storage unit 10 together with the user identify code (S10).

An unwanted word process is carried out by unwanted word processing unit 34 on the input offerable data (S26). Words in the data are extracted according to word dictionary 6 by word extraction processing unit 36 (S32). The extracted words are stored in offerable data storage unit 8 (S34).

As to the stored operation history data, words in the data are extracted according to word dictionary 6 by word extraction processing unit 36 (S14). The vector sum is calculated of the word vectors corresponding to the extracted word for each operation history data by vector generation processing unit 38 (S16). Then, the vector sum is stored in operation history vector storage unit 12 (S18).

When a predetermined time has elapsed from the previous information-of-interest offer or when operation history data is stored exceeding a predetermined amount (YES at S44), operation history vectors are read out to be classified into categories by clustering processing unit 40 (S48). Information-of-interest generation processing unit 44 generates information-of-interest extracting all words appearing in the operation history data included in each classified category (S50). Retrieval processing unit 46 retrieves an information item of high interest to the user from the offerable data according to the information-of-interest for each user (S58). The output order of the information items is determined by offering information sort processing unit 48 (S60). Output unit 16 provides monitor 88 or printer 86 with the information item of high interest to the user according to the output sequence (S62).

A modification of the first embodiment will be described here.

The present modification has input unit 2 and output unit 16 of Fig. 1 modified into a reception unit 18 and a transmission unit 22, respectively. Reception unit 18 and transmission unit 22 are connected over the network with another computer, work station or the like via a communication line to allow data transmission and reception.

Reception unit 18 receives use's operation history data with a user identify code from another computer.

Transmission unit 22 transmits the information item sorted by offering information sort processing unit 48 according to the user identify code to the other computer that is the source of the reception data.

For example, the information offer apparatus of the present invention can be realized by a computer that functions as a proxy server for connection to the Internet. In this case, the operation history data is received together with the user identify code from the client's personal computer at reception unit 18. The operation history data is stored in operation history data storage unit 12 for each user. Information-of-interest processing unit 30 retrieves the information item to be offered to the user according to the characteristic of the operation history data. The information item to be offered is transmitted to the client's personal computer through transmission unit 22.

According to the information offer apparatus of the present embodiment, an information item of interest to the user can be acquired efficiently by classifying the user's operation history into categories corresponding to the characteristics. As a result, an information item of interest to the user can be offered to the user. By realizing the information offer apparatus of the present embodiment on the network through a server, an information item of interest to the user can be offered even if each client's personal computer is not equipped with the information offer apparatus.

Second Embodiment

An information offer apparatus according to a second embodiment of the present invention will be described here.

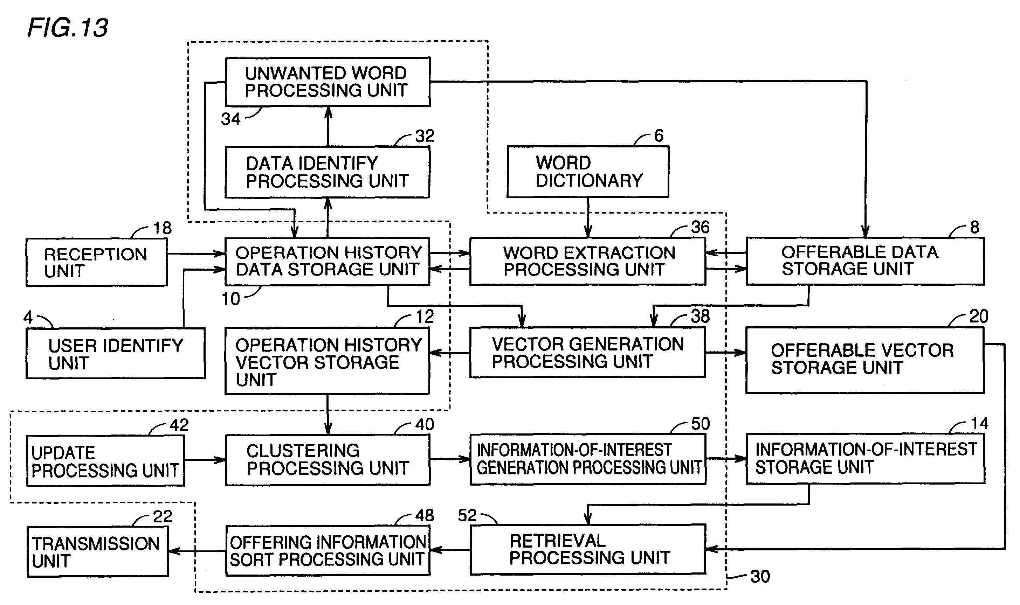

Referring to Fig. 13, the information offer apparatus of the present embodiment further includes an offerable vector storage unit 20 in addition to the apparatus of Fig. 1. The information offer apparatus of the second embodiment includes an information-of-interest generation processing unit 50 and a retrieval processing unit 52 instead of information-of-interest generation unit 44 and retrieval processing unit 46, respectively, shown in Fig. 1. Units 50 and 52 slightly differ from units 44 and 46, respectively, in function.

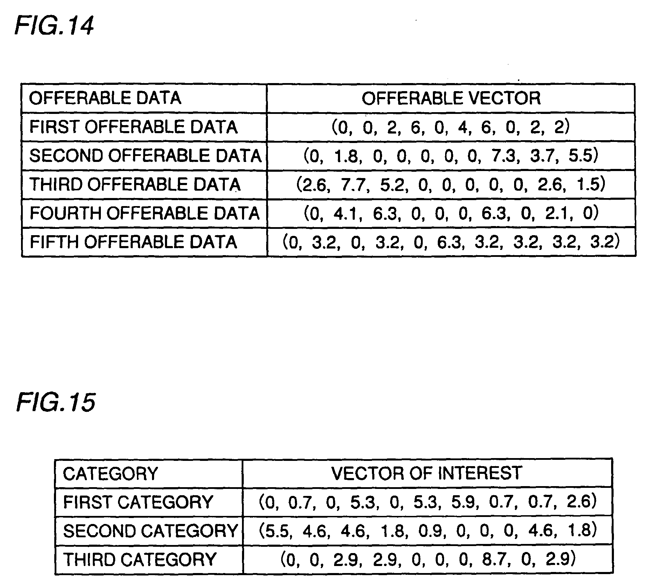

Similar to operation history vector storage unit 12, offerable vector storage unit 20 resides in a predetermined storage region on a fixed disk of the computer to store relevant data. The offerable vector is generated by processes similar to those of the operation history vector by data identify processing unit 32, unwanted word processing unit 34, word extraction processing unit 36 and vector generation processing unit 38. Therefore, detailed description of the same process will not be repeated here. By such processes, operable vectors shown in Fig. 14 are generated from the first to fifth offerable data shown in Fig. 2 to be stored in offerable vector storage unit 20. In the present embodiment, a normalization process is carried out so that the size of each offerable vector becomes ten (10).

Information-of-interest generation processing unit 50 generates a vector of interest as information-of-interest according to the operation history data classified by clustering processing unit 40. The vector of interest is obtained by obtaining the vector sum of the operation history vectors corresponding to each category and applying a normalization process that sets the size of the vectors to 10. For example, the vector of interest of the second category in Fig. 6 corresponds to the sum of the operation history vectors of the first operation history data of the second category and the third operation history data. The vector sum of respective operation history data in Fig. 5 is calculated to become (6, 5, 5, 2, 1, 0, 0, 0, 5, 2). By applying a normalization process so that the size of this vector becomes 10, (5.5, 4.6, 4.6, 1.8, 0.9, 0, 0, 0, 4.6, 1.8) is obtained as shown in Fig. 15 (rounded off to the nearest tenth). This becomes the vector of interest for the second category. The vector of interest obtained for each category is stored in information-of-interest storage unit 14.

Retrieval processing unit 52 retrieves an information item of interest to the user from the offerable vector shown in Fig. 14 and the vector of interest shown in Fig. 15. Retrieval processing unit 52 calculates the evaluation of an offerable vector Vi (referred to as "the second retrieval point" hereinafter) according to a vector of interest Vq for each category using the following second equation.

$$\text{Second retrieval point} = Vq \cdot Vi \qquad \text{[Second equation]}$$

In the second equation, the operator " $\cdot$ " represents the inner product of the vectors. Since a normalization process to set the size of both Vq and Vi to ten is applied, the value of the second retrieval point takes a value from 0 to 100. The value of the second retrieval point becomes higher as the vector distance is closer.

An operation of the information offer apparatus of the second embodiment is set forth in the following.

Detailed description as to the operation similar to that of the first embodiment will not be repeated here. Only different operations will be described.

At S54 of Fig. 12, CPU 72 reads out the offerable vector from offerable vector storage unit 20 as offerable data. At S56, CPU 72 reads out the vector of interest from information-of-interest storage unit 14 as information-of-interest data.

At S58, retrieval processing unit 52 retrieves a vector corresponding to the information item of interest to the user according to the vector of interest read out at S56 from the offerable vectors read out at S54. As to each category of Fig. 15, the second retrieval point of the offerable vector for each offerable data shown in Fig. 14 is calculated. Those having the highest second retrieval point (top) are set forth in the following.

| First category | top first offerable data | 95 |
| Second category | top third offerable data | 85.6 |
| Third category | top second offerable data | 79.5 |

At S60, offering information sort processing unit 48 defines the output order of the top offerable data for each category retrieved at S58. In the present embodiment, the order is the first offerable data, the third offerable data and the second offerable data.

According to the information offer apparatus of the present embodiment, the user's operation history data are classified into categories according to the characteristic thereof to generate a vector of interest for each category. Also, a word vector of the offerable data is generated. By a vector operation thereof, an information item of interest to the user can be acquired in high accuracy.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.   An information offer apparatus comprising:

a first storage unit storing a plurality of words and vectors in correspondence, each of said vectors representing a characteristic of respective one of said words,
an information preparation unit preparing an information item to be offered to a user, and first characteristic data generated according to words and vectors stored in said first storage unit for each of said offered information items,

a second storage unit storing an information item used by a user,

a classify circuit referring to words and vectors stored in said first storage unit to classify information items stored in said second storage unit into a plurality of categories according to words and corresponding vectors included in each said information item, each of said plurality of categories being characterized by second characteristic data defined in relation to the words and vectors included in said category, and

a retrieval circuit retrieving and providing an information item including first characteristic data having a predetermined relationship with said second characteristic data out of information items prepared and offered to the user by said information preparation unit.

2. The information offer apparatus according to claim 1, wherein said second storage unit stores a plurality of said information items used by a user, and
wherein said classify circuit includes a circuit classifying a plurality of information items stored in said second storage unit into a plurality of categories according to either one or both of a distance and cosine angle between a plurality of vectors corresponding to said plurality of information items.

3. The information offer apparatus according to claim 1, wherein

said first characteristic data includes a word appearing in an information item offered to a user,

said second characteristic data includes a word appearing in an information item included in each category, and

said retrieval circuit comprises a circuit retrieving an information item including first characteristic data having a predetermined relationship with said second characteristic data out of information items prepared and offered to the user by said information preparation unit by a word included in said first characteristic data and a word included in said second characteristic data.

4. The information offer apparatus according to claim 1, wherein

said first characteristic data includes a vector corresponding to a word appearing in an information item offered to a user,

said second characteristic data includes a vector corresponding to a word appearing in an information item included in each category, and

said retrieval circuit comprises a circuit retrieving an information item including first characteristic data having a predetermined relationship with said second characteristic data out of information items prepared and offered to the user by said information preparation unit by a vector included in said first characteristic data and a vector included in said second characteristic data.

5. The information offer apparatus according to claim 1, further comprising a first identify circuit identifying a user, wherein either one or both of said information preparation unit and said second storage unit comprise a plurality of storage units storing information items distinguished by each user,
wherein said retrieval circuit comprises a circuit processing only an information item corresponding to an identified user.

6. The information offer apparatus according to claim 1, further comprising a second identify circuit identifying the type of information item used by the user,
wherein either one or both of said information preparation unit and said second storage unit comprise a plurality of storage units storing an information item distinguished by each type of information item,
wherein said retrieval circuit includes a circuit processing only an information item corresponding to the identified type of information item.

7. The information offer apparatus according to claim 1, further comprising a processing circuit removing an unwanted word from either one or both of an information item offered to a user and an information item used by the user.

8. The information offer apparatus according to claim 1, wherein said retrieval circuit comprises a circuit rearranging for output retrieved information items in an order of importance for a user.

9. The information offer apparatus according to claim 1, further comprising a designation circuit designating start of classifying information items stored in said second storage unit towards said classify circuit when a predetermined condition is satisfied.

**10.** The information offer apparatus according to claim 1, further comprising a reception circuit receiving an information item used by a user, and a transmission circuit transmitting the information item retrieved and offered to the user by said retrieval circuit towards a source of said information item.

**11.** An information offer apparatus comprising:

first storage means for storing a plurality of words and vectors in correspondence, each of said vectors representing a characteristic of respective one of said words,
means for preparing an information item to be offered to a user and first characteristic data generated according to words and vectors stored in said first storage means for each said offered information item,
second storage means for storing an information item used by a user,
means for classifying information items stored in said second storage means into a plurality of categories according to words and corresponding vectors included in each said information item by referring to words and vectors stored in said first storage means, each of said plurality of categories being characterized by second characteristic data defined in relation to the words and vectors included in said category, and
means for retrieving and providing an information item including first characteristic data having a predetermined relationship with said second characteristic data out of information items prepared and offered to the user by said preparation means.

**12.** The information offer apparatus according to claim 11, wherein said second storage means stores a plurality of said information items used by a user,
wherein said classify means comprises means for classifying a plurality of information items stored in said second storage means into a plurality of categories according to either one or both of a distance and cosine angle between a plurality of vectors corresponding to said plurality of information items.

**13.** The information offer apparatus according to claim 11, wherein

said first characteristic data includes a word appearing in an information item offered to a user,
said second characteristic data includes a word appearing in an information item included in each category,
said retrieval means comprises means for retrieving an information item including first characteristic data having a predetermined relationship with said second characteristic data out of information items prepared and offered to the user by said preparation means by a word included in said first characteristic data and a word included in said second characteristic data.

**14.** The information offer apparatus according to claim 11, wherein

said first characteristic data includes a vector corresponding to a word appearing in an information item offered to a user,
said second characteristic data includes a vector corresponding to a word appearing in an information item included in each category, and
said retrieval means comprises means for retrieving an information item including first characteristic data having a predetermined relationship with said second characteristic data out of information items prepared and offered to the user by said preparation mean by the vector included in said first characteristic data and the vector included in said second characteristic data.

**15.** The information offer apparatus according to claim 11, further comprising first identify means for identifying a user, wherein either one or both of said preparation means and said second storage means comprise a plurality of means for storing an information item distinguished by each user,
wherein said retrieval means comprises means for processing only an information item corresponding to an identified user.

**16.** The information offer apparatus according to claim 11, further comprising second identify means for identifying the type of an information item used by a user,
wherein either one or both of said preparation means and said second storage means comprises a plurality of means for storing an information item distinguished by each type of information item,
wherein said retrieval means comprises means for processing only an information item corresponding to the identified type of information item.

**17.** The information offer apparatus according to claim 11, further comprising means for removing an unwanted word from either one or both of an information item offered to the user and an information item used by the user.

**18.** The information offer apparatus according to claim 11, wherein said retrieval means comprises means for rearranging for output retrieved information items in an order of importance for a user.

**19.** The information offer apparatus according to claim 11, further comprising means for designating start of classifying information items stored in said second storage means towards said classify means when a predetermined condition is satisfied.

**20.** The information offer apparatus according to claim 11, further comprising means for receiving an information item used by the user, and means for transmitting an information item retrieved and offered to the user by said retrieval means to a source of said information item.

**21.** A method of offering an information item to a user using a computer, comprising the steps of:

storing a plurality of words and vectors in correspondence, each of said vectors representing a characteristic of respective one of said words,
preparing an information item to be offered to the user, and first characteristic data generated according to words and vectors stored in said step of storing a plurality of words with respect to each said offered information item,
storing an information item used by a user,
classifying information items stored at said step of storing an information item into a plurality of categories according to words and corresponding vectors included in each said information item by referring to words and vectors stored at said step of storing a plurality of words, each said plurality of categories being characterized by second characteristic data defined in relation to the words and vectors included in said category, and
retrieving and providing an information item including first characteristic data that has a predetermined relationship with said second characteristic data out of information items prepared and offered to the user at said step of preparing an information item.

**22.** The information offer method according to claim 21, wherein said step of storing an information item stores a plurality of said information items used by a user,
wherein said step of classifying information items includes the step of classifying said plurality of information items stored at said step of storing an information item into a plurality of categories according to either one or both of a distance and cosine angle between a plurality of vectors corresponding to said plurality of information items.

**23.** The information offer method according to claim 21, wherein

said first characteristic data includes a word appearing in an information item offered to a user,
said second characteristic data includes a word appearing in an information item included in each category, and
said step of retrieving an information item includes the step of retrieving an information item including first characteristic data having a predetermined relationship with said second characteristic data out of information items prepared and offered to the user at said step of preparing an information item by the word included in said first characteristic data and the word included in said second characteristic data.

**24.** The information offer method according to claim 21, wherein

said first characteristic data includes a vector corresponding to a word appearing in an information item offered to the user,
said second characteristic data includes a vector corresponding to a word appearing in an information item included in each category,
said step of retrieving an information item includes the step of retrieving an information item including first characteristic data having a predetermined relationship with said second characteristic data out of information items prepared and offered to the user by said step of preparing an information item by the vector included in said first characteristic data and the vector included in said second characteristic data.

**25.** The information offer method according to claim 21, further comprising the step of identifying a user,

wherein either one or both of said step of preparing an information item and said step of storing an information item include the step of storing an information item distinguished by each user,

wherein said step of retrieving an information item includes the step of processing only information corresponding to an identified user.

26. The information offer method according to claim 21, further comprising the step of identifying the type of an information item used by a user,

wherein either one or both of said step of preparing an information item and said step of storing an information item includes the step of storing an information item distinguished by each type of information item,

wherein said step of retrieving an information item includes the step of processing only an information item corresponding to the identified type of information item.

27. The information offer method according to claim 21, further comprising the step of removing an unwanted word from either one or both of an information item offered to a user and an information item used by the user.

28. The information offer method according to claim 21, wherein said step of retrieving an information item comprises the step of rearranging for output and providing retrieved offered information in an order of importance for a user.

29. The information offer method according to claim 21, further comprising the step of designating start of classifying information items stored at said step of storing an information item when a predetermined condition is satisfied.

30. The information offer method according to claim 21, further comprising the step of receiving an information item used by a user, and the step of transmitting an information item retrieved and offered to the user by said step of retrieving an information item to a source of said information item.

31. A computer-readable recording medium encoded with a program realizing an information offer method offering an information item to a user using a computer, comprising the steps of:

storing a plurality of words and vectors in correspondence, each of said vectors representing a characteristic of corresponding one of said words,

preparing an information item to be offered to the user, and first characteristic data generated according to words and vectors stored at said step of storing a plurality of words with respect to each said offered information item,

storing an information item used by a user,

classifying information items stored at said step of storing an information item into a plurality of categories according to words and corresponding vectors included in each said information item referring to words and vectors stored at said step of storing a plurality of words, each of said plurality of categories being characterized by second characteristic data defined in relation to the words and vectors included in said category, and

retrieving and providing an information item including first characteristic data that has a predetermined relationship with said second characteristic data out of information items prepared and offered to the user at said step of preparing an information item.

32. The computer-readable recording medium according to claim 31, wherein

said step of storing an information item includes the step of storing a plurality of said information items used by the user, and

said step of classifying information items includes the step of classifying said plurality of information items stored at said step of storing an information item into a plurality of categories according to either one or both of a distance and cosine angle between a plurality of vectors corresponding to said plurality of information items.

33. The computer-readable recording medium according to claim 31, wherein

said first characteristic data includes a word appearing in an information item offered to a user,

said second characteristic data includes a word appearing in an information item included in each category, and

said step of retrieving an information item includes the step of retrieving an information item including first characteristic data having a predetermined relationship with said second characteristic data out of information items prepared and offered to the user at said step of preparing an information item by the word included in said first characteristic data and the word included in said second characteristic data.

**34.** The computer-readable recording medium according to claim 31, wherein

said first characteristic data includes a vector corresponding to a word appearing in an information item offered to a user,
said second characteristic data includes a vector corresponding to a word appearing in an information item included in each category,
said step of retrieving an information item includes the step of retrieving an information item including first characteristic data having a predetermined relationship with said second characteristic data out of information items prepared and offered to the user at said step of preparing an information item by the vector included in said first characteristic data and the vector included in said second characteristic data.

**35.** The computer-readable recording medium according to claim 31, said information offer method further comprising the step of identifying a user, wherein

either one or both of said step of preparing an information item and said step of storing an information item include the step of storing an information item distinguished by each user, and
said step of retrieving an information item includes the step of processing only information corresponding to an identified user.

**36.** The computer-readable recording medium according to claim 31, said information offer method further comprising the step of identifying a type of an information item utilized by a user, wherein

either one or both of said step of preparing an information item and said step of storing an information item include the step of storing an information item distinguished by each type of information item, and
said step of retrieving an information item includes the step of processing only an information item corresponding to the identified type of information item.

**37.** The computer-readable recording medium according to claim 31, said information offer method further comprising the step of removing an unwanted word from either one or both of an information item offered to a user and an information item used by the user.

**38.** The computer-readable recording apparatus according to claim 31, wherein said step of retrieving an information item comprises the step of rearranging and providing retrieved offered information in an order of importance for a user.

**39.** The computer-readable recording medium according to claim 31, said information offer method further comprising the step of designating start of classifying information items stored at said step of storing an information item when a predetermined condition is satisfied.

**40.** The computer-readable recording medium according to claim 31, said information offer method further comprising the step of receiving an information item used by a user, and the step of transmitting an information item retrieved and offered to the user at said step of retrieving an information item to a source of said information item.

*FIG.1*

EP 1 079 314 A2

## FIG.2

| OFFERABLE DATA | DATA CONTENTS |
|---|---|
| FIRST OFFERABLE DATA | NEWS TELEVISION<br>1999/05/27 09:00~09:30 BROADCASTING STATION A G CODE:29395<br>HAPPENING AND SPORTS |
| SECOND OFFERABLE DATA | COMIC DIALOGUE!<br>1999/05/27 10:00~10:30 BROADCASTING STATION B G CODE:03959<br>LAUGHTER COMEDY THEATER |
| THIRD OFFERABLE DATA | INFORMATION OF SIGHTS<br>1999/05/27 10:00~10:30 BROADCASTING STATION C G CODE:01982<br>INTRODUCTION OF SIGHTS AND HOT SPRINGS |
| FOURTH OFFERABLE DATA | SUSPENSE<br>1999/05/27 21:00~22:50 BROADCASTING STATION A G CODE:190132<br>KYOTO MYSTERY |
| FIFTH OFFERABLE DATA | TODAY'S ECONOMICS<br>1999/05/27 11:00~11:30 BROADCASTING STATION D G CODE:60321<br>STOCK INFORMATION |

EP 1 079 314 A2

## FIG.3

| OPERATION HISTORY DATA | DATA CONTENTS |
|---|---|
| FIRST OPERATION HISTORY DATA | MOOD OF JOURNEY TODAY<br>1999/05/27 09:00~09:30 BROADCASTING STATION A G CODE: 12356<br>INTRODUCTION OF HOT SPRING |
| SECOND OPERATION HISTORY DATA | TODAY'S NEWS<br>1999/05/27 10:00~10:30 BROADCASTING STATION B G CODE: 53864<br>NEWS AND STOCK AND SPORTS |
| THIRD OPERATION HISTORY DATA | JOURNEY GUIDE!<br>1999/05/27 10:00~10:30 BROADCASTING STATION C G CODE: 32165<br>HOT SPRING AND HOTEL INFORMATION |
| FOURTH OPERATION HISTORY DATA | LAUGHTER MOOD<br>1999/05/27 21:00~22:50 BROADCASTING STATION A G CODE: 14564<br>LAUGHTER WITH NARRATIVE |
| FIFTH OPERATION HISTORY DATA | SPECIAL REPORTS<br>1999/05/27 11:00~11:30 BROADCASTING STATION D G CODE: 23461<br>NEWS AND ECONOMICS |
| SIXTH OPERATION HISTORY DATA | SPORT TELEVISION<br>1999/05/27 11:00~11:30 BROADCASTING STATION C G CODE: 11034<br>PROFESSIONAL BASEBALL INFORMATION |

## FIG.4

| NUMBER | WORD | WORD VECTOR (n=10) |
|---|---|---|
| 1 | COMEDY | $x1 = (0, 0, 0, 0, 0, 0, 0, 1, 1, 1)$ |
| 2 | HOT SPRING | $x2 = (1, 1, 1, 0, 0, 0, 0, 0, 1, 0)$ |
| 3 | STOCK | $x3 = (0, 0, 0, 0, 0, 1, 1, 0, 0, 0)$ |
| 4 | MOOD | $x4 = (0, 0, 0, 1, 1, 0, 0, 0, 0, 0)$ |
| 5 | TODAY | $x5 = (0, 0, 0, 1, 0, 0, 0, 0, 0, 1)$ |
| 6 | ECONOMICS | $x6 = (0, 0, 0, 0, 0, 1, 0, 1, 1, 0)$ |
| 7 | KYOTO | $x7 = (0, 1, 1, 0, 0, 0, 1, 0, 0, 0)$ |
| 6 | GUIDE | $x8 = (0, 0, 1, 0, 0, 0, 0, 0, 0, 0)$ |
| 9 | NARRATIVE | $x9 = (0, 0, 0, 0, 0, 0, 0, 1, 0, 1)$ |
| 10 | THEATER | $x10 = (0, 1, 0, 0, 0, 0, 0, 1, 0, 1)$ |
| 11 | SUSPENSE | $x11 = (0, 0, 1, 0, 0, 0, 1, 0, 0, 0)$ |
| 12 | HAPPENING | $x12 = (0, 0, 1, 0, 0, 0, 1, 0, 1, 0)$ |
| 13 | INTRODUCTION | $x13 = (1, 0, 0, 0, 0, 0, 0, 0, 0, 0)$ |
| 14 | INFORMATION | $x14 = (0, 1, 0, 0, 0, 0, 0, 0, 0, 0)$ |
| 15 | SPORTS | $x15 = (0, 0, 0, 1, 0, 1, 1, 0, 0, 1)$ |
| 16 | TELEVISION | $x16 = (0, 0, 0, 1, 0, 0, 0, 0, 0, 1)$ |
| 17 | NEWS | $x17 = (0, 0, 0, 1, 0, 1, 1, 0, 0, 0)$ |
| 18 | REPORTORIAL | $x18 = (0, 0, 0, 1, 0, 1, 1, 0, 0, 0)$ |
| 19 | LAUGHTER | $x19 = (0, 0, 0, 0, 0, 0, 0, 1, 0, 0)$ |
| 20 | PROFESSIONAL BASEBALL | $x20 = (0, 0, 0, 1, 0, 1, 1, 0, 0, 0)$ |
| 21 | COMIC DIALOGUE | $x21 = (0, 0, 0, 0, 0, 0, 0, 1, 1, 1)$ |
| 22 | SIGHTS | $x22 = (0, 1, 1, 0, 0, 0, 0, 0, 1, 0)$ |
| 23 | MYSTERY | $x23 = (0, 1, 1, 0, 0, 0, 1, 0, 0, 0)$ |
| 24 | HOTEL | $x24 = (1, 1, 1, 0, 0, 0, 0, 0, 1, 1)$ |
| 25 | JOURNEY | $x25 = (1, 1, 0, 0, 0, 0, 0, 0, 1, 0)$ |

FIG.5

| OPERATION HISTORY DATA | OPERATION HISTORY VECTOR |
|---|---|
| FIRST OPERATION HISTORY DATA | (3, 2, 1, 2, 1, 0, 0, 0, 2, 1) |
| SECOND OPERATION HISTORY DATA | (0, 1, 0, 3, 0, 3, 4, 1, 1, 2) |
| THIRD OPERATION HISTORY DATA | (3, 3, 4, 0, 0, 0, 0, 0, 3, 1) |
| FOURTH OPERATION HISTORY DATA | (0, 0, 1, 1, 0, 0, 0, 3, 0, 3) |
| FIFTH OPERATION HISTORY DATA | (0, 0, 0, 2, 0, 3, 3, 0, 0, 0) |
| SIXTH OPERATION HISTORY DATA | (0, 0, 0, 3, 0, 2, 2, 0, 0, 2) |

FIG.6

| CATEGORY | OPERATION HISTORY DATA IN CATEGORY |
|---|---|
| FIRST CATEGORY | SECOND OPERATION HISTORY DATA, FIFTH OPERATION HISTORY DATA, SIXTH OPERATION HISTORY DATA |
| SECOND CATEGORY | FIRST OPERATION HISTORY DATA, THIRD OPERATION HISTORY DATA |
| THIRD CATEGORY | FOURTH OPERATION HISTORY DATA |

FIG.7

| CATEGORY | INFORMATION-OF-INTEREST (APPEARING WORDS) |
|---|---|
| FIRST CATEGORY | NEWS, SPORTS, TODAY, STOCK, REPORTORIAL,TELEVISION, PROFESSIONAL BASEBALL, INFORMATION |
| SECOND CATEGORY | JOURNEY, HOT SPRING, TODAY, MOOD, GUIDE,HOTEL, INFORMATION |
| THIRD CATEGORY | LAUGHTER, NARRATIVE, MOOD |

## FIG.8

## FIG.9

## FIG.10

```
( OPERATION HISTORY DATA PROCESS )—S2
                    │
                    ▼
   ┌──────────────────────────┐
   │ READ OUT INPUT OPERATION │—S4
   │ HISTORY DATA             │
   └──────────────────────────┘
                    │
                    ▼
   ┌──────────────────────────┐
   │ DATA IDENTIFY PROCESS    │—S6
   └──────────────────────────┘
                    │
                    ▼
   ┌──────────────────────────┐
   │ UNWANTED WORD PROCESS    │—S8
   └──────────────────────────┘
                    │
                    ▼
   ┌──────────────────────────────┐
   │ TEMPORARILY STORE INTO OPERATION │—S10
   │ HISTORY DATA STORAGE UNIT    │
   └──────────────────────────────┘
                    │
                    ▼
   ┌──────────────────────────────┐
   │ READ OUT WORD DICTIONARY,READ OUT │—S12
   │ STORED OPERATION HISTORY DATA │
   └──────────────────────────────┘
                    │
                    ▼
   ┌──────────────────────────┐
   │ WORD EXTRACTION PROCESS  │—S14
   └──────────────────────────┘
                    │
                    ▼
   ┌──────────────────────────┐
   │ OPERATION HISTORY VECTOR │—S16
   │ GENERATION PROCESS       │
   └──────────────────────────┘
                    │
                    ▼
   ┌──────────────────────────┐
   │ STORE INTO OPERATION HISTORY │—S18
   │ VECTOR STORAGE UNIT      │
   └──────────────────────────┘
```

## FIG.11

```
        ( OFFERABLE DATA PROCESS )─── S22
                     │
                     ▼
   ┌──────────────────────────────────┐
   │  READ OUT INPUT OFFERABLE DATA    │─── S24
   └──────────────────────────────────┘
                     │
                     ▼
      ┌───────────────────────────┐
      │   UNWANTED WORD PROCESS    │─── S26
      └───────────────────────────┘
                     │
                     ▼
   ┌──────────────────────────────────┐
   │  TEMPORARILY STORE INTO           │─── S28
   │  OFFERABLE DATA STORAGE UNIT      │
   └──────────────────────────────────┘
                     │
                     ▼
   ┌──────────────────────────────────┐
   │  READ OUT STORED OFFERABLE DATA   │─── S30
   └──────────────────────────────────┘
                     │
                     ▼
      ┌───────────────────────────┐
      │   WORD EXTRACTION PROCESS  │─── S32
      └───────────────────────────┘
                     │
                     ▼
   ┌──────────────────────────────────┐
   │  STORE INTO OFFERABLE DATA        │─── S34
   │  STORAGE UNIT                     │
   └──────────────────────────────────┘
```

## FIG.12

RETRIEVAL PROCESS — S42

DESIGNATION FROM UPDATE PROCESSING UNIT — S44
NO
YES

READ OUT OPERATION HISTORY VECTOR FROM OPERATION HISTORY VECTOR STORAGE UNIT — S46

CLUSTERING PROCESS — S48

INFORMATION-OF-INTEREST GENERATION PROCESS — S50

STORE INTO INFORMATION-OF-INTEREST STORAGE UNIT — S52

READ OUT OFFERABLE DATA FROM OFFERABLE DATA STORAGE UNIT — S54

READ OUT INFORMATION-OF-INTEREST DATA FROM INFORMATION-OF-INTEREST STORAGE UNIT — S56

RETRIEVAL PROCESS — S58

OFFER INFORMATION SORT PROCESS — S60

OUTPUT OFFER INFORMATION — S62

EP 1 079 314 A2

**FIG.13**

*FIG.14*

| OFFERABLE DATA | OFFERABLE VECTOR |
|---|---|
| FIRST OFFERABLE DATA | (0, 0, 2, 6, 0, 4, 6, 0, 2, 2) |
| SECOND OFFERABLE DATA | (0, 1.8, 0, 0, 0, 0, 0, 7.3, 3.7, 5.5) |
| THIRD OFFERABLE DATA | (2.6, 7.7, 5.2, 0, 0, 0, 0, 0, 2.6, 1.5) |
| FOURTH OFFERABLE DATA | (0, 4.1, 6.3, 0, 0, 0, 6.3, 0, 2.1, 0) |
| FIFTH OFFERABLE DATA | (0, 3.2, 0, 3.2, 0, 6.3, 3.2, 3.2, 3.2, 3.2) |

*FIG.15*

| CATEGORY | VECTOR OF INTEREST |
|---|---|
| FIRST CATEGORY | (0, 0.7, 0, 5.3, 0, 5.3, 5.9, 0.7, 0.7, 2.6) |
| SECOND CATEGORY | (5.5, 4.6, 4.6, 1.8, 0.9, 0, 0, 0, 4.6, 1.8) |
| THIRD CATEGORY | (0, 0, 2.9, 2.9, 0, 0, 0, 8.7, 0, 2.9) |